# EUROPEAN PATENT APPLICATION

(11) **EP 4 050 555 A1**
(43) Date of publication of application: **31.08.2022**
(21) Application number: 21159233.2
(22) Date of filing: 25.02.2021
(51) Int. Cl.: G06T 5/00, G06T 5/50

(54) **METHOD FOR REMOVING IMAGE ARTIFACTS AND DEVICE**

(71) Applicant: Beijing Xiaomi Mobile Software Co., Ltd., Beijing 100085 (CN)
(72) Inventor: BIRINCI, Murat, 33720 TAMPERE (FI); FINNILÄ, Tapio, 33720 TAMPERE (FI); NIKKANEN, Jarno, 33720 TAMPERE (FI)
(74) Representative: dompatent von Kreisler Selting Werner - Partnerschaft von Patent- und Rechtsanwälten mbB

(57) **Abstract**

Method, device and software for removing image artifacts, implemented in a multiple camera device, wherein the method comprises the steps of: Capturing an initial image with the target camera and capturing at least one support image with a support camera at substantially the same time; Aligning the initial image and the at least one support image; Comparing the aligned initial image and the at least one support image and identify at least one region of difference corresponding to image artifacts; and Transferring image information of the at least one region of difference from the support image to the initial image to form the final to remove the image artifact.

## Description

It is an object of the present invention to provide a method for removing image artifacts implemented in a multiple cameras device, a multiple cameras device, and a mobile terminal having a multiple cameras device.

Photography with a mobile terminal is becoming more and more popular. Simultaneously the demands on the quality of the images made with the mobile terminal are increasing. In order to increase the versatility of the mobile terminal for the use of photography, recently, mobile terminals have several cameras or camera modules implemented with different focal length since usually, due to the tight space constrains in a mobile terminal, a variable focal length of a photo camera is not possible. Thus, different cameras are implemented in one device, each having a different focal length, wherein each camera having at least one lens and one camera chip, such as a CMOS or the like.

A huge impact on the quality of the made images is the avoidance of image artifacts. Therein, possible image artifacts are caused by the camera itself, such as lens glare originating from internal reflections of an intense light source, e.g. the sun or a lamp. Further image artifacts arise from scratches or dust on the camera cover or a lens. Further, image artifacts might be caused by handling for example due to partially covering lenses of one camera by a user's finger or a user's finger placed too close to the camera such that stray light from the finger causing false colors in the image.

Usually, image artifacts cannot be recovered, and the image is lost due to unacceptable image quality which is undesirable.

In Ramesh Raskar, Amit Agrawal, Cyrus A. Wilson, and Ashok Veeraraghavan. (2008) "Glare aware photography: 4D ray sampling for reducing glare effects of camera lenses", ACM Trans. Graph. 27(3), pp. 1-10*,* , a mask is placed in front of the camera sensor, wherein by turning on and off each optical shutter element of the mask, the respective areas of the image that include scattered light and lens flare can be detected. By turning off the optical shutter area element that corresponds to the position of the lens glare, the glare can be removed. However, this approach requires additional hardware which might not be able to be implemented in a mobile terminal due to the space requirements, and further, it is noted that such a mask is deteriorating the image quality due to a loss of light received at the camera sensor.

By Yicheng Wu, Qiurui He, Tianfan Xue, Rahul Garg, Jiawen Chen, Ashok Veeraraghavan, Jonathan T. Barron (submitted 2020), "Single-Image Lens Flare Removal", arXiv:2011.12485*,* a neural network based approach is suggested targeting to remove all types of artifacts arising from lens flare. In this prior art, synthetic flare images are created based on a model for lens flare in order to train the neural network. However, this solution requires high computational efforts, tremendously reducing the speed of the camera and also increasing the hardware demands.

Thus, it is an object of the present invention to provide a method and device in order to be able to remove image artifacts.

In a first aspect of the present invention, a method for removing image artifacts is provided implemented in a multiple cameras device comprising the steps of:
a) Capturing an initial image with the target camera and capturing at least one support image with a support camera at substantially the same time;
b) Aligning the initial image and the at least one support image;
c) Comparing the aligned initial image and the at least one support image and identify at least one region of difference corresponding to image artifacts;
d) Transferring image information of the at least one region of difference from the support image to the initial image to form the final to remove the image artifact.

Therein, the target camera is the camera of the multiple cameras device selected by the user and intended to shoot the image. Further, the target camera and the at least one support camera are capturing the initial image and the support image, respectively, at substantially the same time. This means that the initial image and the support image are captured within a time that movement of the multiple cameras device has no or a minor influence on the images and differences between the initial image and the at least on support image results mainly from the different position of the cameras and the different focal length.
Further, the transferred image information is the information containing the image content which can be identified by the color information.
Thus, by the present invention, the existence of more than one camera is exploited in order to correct the image for image artifacts and to create an image artifact-free final image. Therein, the solution of the present invention does neither require any additional hardware nor substantial increased computational efforts, since the image information of the one or more regions of difference are transferred between the initial image and the support image in order to form the final image.

Preferably, more than one support image is captured from a respective number of support cameras and used in the subsequent steps, i.e. being aligned with the initial image and used in order to identify the one or more regions of difference. Further, the image information transferred from the one or more support images may be an average of the color information and / or may be selected based on a preset threshold ruling out those image information deviating too much from the image information of the other support images or the initial image in order to avoid incorporation of additional image artifacts by transferring the image information from a corrupt support image.

Preferably, aligning is performed by a preset transformation, wherein the preset transformation is determined according to the fixed relative position, focal length, or other optical distortions of the target camera and the at least one support camera. Since the multiple cameras device comprises two or more cameras which are fixed in their position relative to each other, a transformation, for example in form of a transformation matrix, can be precalculated in order to align the support image with the initial image. Further differences which might arise from focal length, optical distortions, or the like can also be considered and compensated for when determining the preset transformation in order to align the support image and the initial image. Thereby, the computational efforts upon shooting the image are reduced, reducing the computational burden to the multiple cameras device.

Preferably, after aligning the initial image and the at least one support image by the preset transformation, an additional alignment transformation is determined and applied preferably to the one or more regions of difference. Thus, in case of slight deviation of the alignment between the initial image and the support image (for example due to movement of the multiple cameras device during capturing and not exactly simultaneous capturing of the target camera and the at least one support camera), optimal alignment at least for the one or more regions of difference can be determined in order to avoid incorporation of additional image artifacts in the final image due to misalignment between the initial image and the support image.

Preferably, the additional alignment transformation is determined and applied if the distance between the target camera and an object of the image is smaller than a preset threshold. In particular, if the distance between the real-world object of the image and the target camera is smaller than a preset threshold, the preset transformation calculated in advance is not applicable anymore. In this case, the preset transformation is applied for alignment and afterwards a fine alignment by the additional alignment transformation is applied. Therein, the computational burden is reduced since the one or more regions of difference is considered instead of the whole image.

Preferably, the region of difference is identified by one or more of a region detection algorithm, such as MSER algorithm (maximally stable extremal regions algorithm). Additionally or alternatively, a preset threshold can be used in order to identify the differences between the initial image and the at least one support image. Therein, the preset threshold further reduces the computational efforts to be carried out by the multiple cameras device also reducing the hardware demands.

Preferably, the region of difference is identified by one or more of a shape, a size, a relative distance, a color, a texture of the artifacts from each other and a number of artifacts of regions of difference. Therein, in particular, the identification of the region of difference according to one or more of the aforementioned parameters can be combined with the use of an MSER algorithm or the use of a threshold as mentioned above. Therein, prior knowledge about the artifacts having a specific shape, color, texture and/or position relative to each other can be used in order to identify such artifacts more reliably or rule out identified regions of difference (identified for example by the MSER algorithm or the preset threshold) as not being regions containing artifacts to be corrected. Thus, in combination, the accuracy of artifact detection can be increased.

Preferably, the one or more regions of difference are identified by a difference between the initial image and the at least one support image in one channel or a sub-set of channels of the respective color space. Therein, the sub-set of channels refers to a number of channels of the respective color space which is smaller than the total number of channels of the respective color space. For example, if the Lab color space (often also denoted as L*a*b* color space) is used having three channels in total (namely L-channel, a-channel, and b-channel), the region of difference might be identified for example by either comparison of the a-channel or b-channel or L-channel alone or a subset of channels comprising for example the combination of the a-channel and the b-channel. However, different color spaces can be used instead.

Preferably, the transferred image information contains one channel or a sub-set of channels of the respective color space. Thus, for example if the Lab color space is used either the a-channel or the b-channel or the L-channel might be transferred. Alternatively, a sub-set of channels comprising for example the a-channel and the b-channel combinedly can be transferred from the at least one support image to the initial image in order to form the final image.

Preferably, the transferred image information does not contain a lightness value. It has been noted by the present invention that the lightness value might differ between the initial image and the at least one support image, wherein transferring the lightness value would result in additional artifacts in the final image. Thus, for example of the Lab color space, the lightness L is not transferred as image information from the at least one support image to the initial image in order to form the final image.

Preferably, the contrast of the initial image is enhanced corresponding to a difference of a lightness value between the initial image and the at least one support image or a difference of the lightness value between the region of difference in the initial image and the at least one support image. Alternatively, the contrast is enhanced in the one or more regions of difference individually corresponding to a difference of the lightness value between the initial image and the at least one support image. Alternatively, the contrast is enhanced in the one or more regions of difference individually corresponding to a difference of the lightness value between the respective region of difference in the initial image and the at least one support image. For example, when using the Lab color space, the difference in the lightness L between the initial image and the at least one support image is utilized in order to adapt the respective contrast enhancement in the initial image or at least in the one or more regions of difference in the initial image to form the final image. Thereby, image artifacts are further reduced. Therein, it has been noted by the present invention that for example lens glare might cause a reduction of contrast in the image, i.e. haze, which can be removed by contrast enhancement depending on the lightness value difference.

Preferably, a white balancing is performed before transferring the image information to match the white balancing between the initial image and the at least one support image. Since the white balancing might be different between the different cameras, i.e. the target camera and the support camera, matching the white balance improves image quality of the final image and reduces artifacts incorporated by transfer of the image information from the at least one support image to the initial image in order to form the final image.

In a second aspect of the present invention a multiple cameras device having at least two cameras and further comprising a processor and a memory storage. Therein, the memory storage stores instructions, when executed by the processor, to perform the method as previously described.

In a third aspect of the present invention, a mobile terminal is provided comprising a multiple cameras device as described above. Therein, the processor of the multiple cameras device might be a specific processor, such as an image signal processor (ISP) in order to perform the method steps described above. Alternatively, the processor of the multiple cameras device might be the processor of the mobile terminal sharing a common processor.

The invention is further described with reference to the accompanying figures.

Figures show:
- Fig. 1: a smartphone with a multiple cameras device,
- Fig. 2: a flow diagram of the method,
- Fig. 3: a flow diagram of a detail of the present method,
- Fig. 4: a flow diagram of a detail of the present method,
- Fig. 5: an illustration of the steps of the present method,
- Fig. 6: a detailed view of the region of difference of the present method, and
- Fig. 7: a comparison between the respective images.

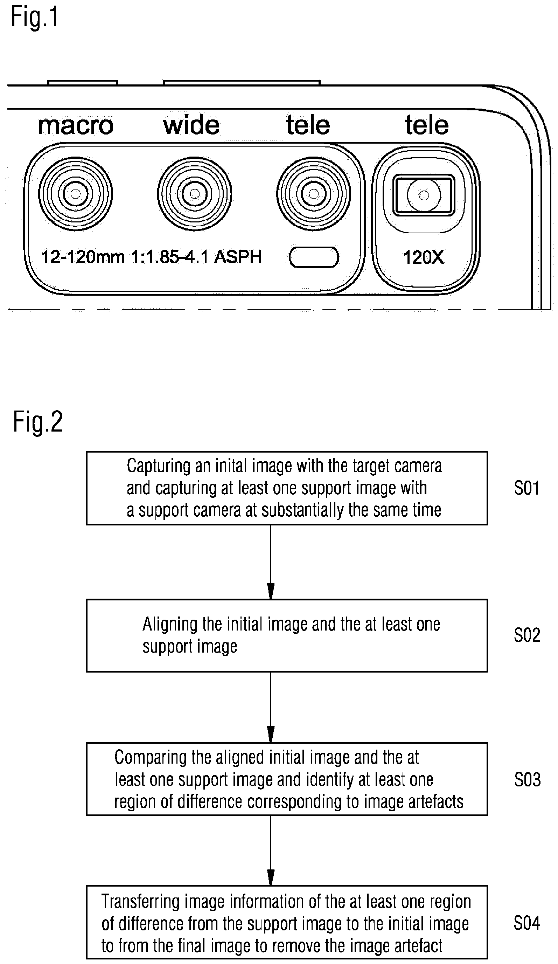

Figure 1 shows a smartphone designed to have multiple different physical world facing cameras. Therein, the cameras might be implemented in a multiple cameras device having at least two different cameras arranged next to each other in a close distance and fixed position and facing in the same direction with an at least partially overlapping field of view. Therein, the cameras for example can be implemented as:
- wide angle camera (usually implemented as a main camera) for various use cases,
- ultra-wide angle camera for use cases that require a very large field of view to be captured,
- macro camera for close-up photos and videos, and
- telephoto camera to capture subjects at long distances.

Therein, the present invention is not limited to the shown combination of cameras and the smartphone according to the present invention may have more or less cameras with same or different focal length applied to same or different use cases. However, in any case, the multiple cameras device has at least two cameras as stated above.

Figure 2 shows a flow diagram of other method according to the present invention.

In step S01, an initial image with the target camera and at least one support image with a support camera are captured at substantially the same time. This means that the initial image and the support image are captured within a time that movement of the multiple cameras device has no or a minor influence on the images and differences between the initial image and the at least on support image results mainly from the different position of the cameras and the different focal length.

In step S02, the initial image and the at least one support image are aligned which is also known as "image registration". Therein, the initial image can be aligned to the support image or the support image can be aligned to the initial image which is advantageous since the initial image shall be transferred to the final image. Therein, aligning includes for example cropping one of the images and/or stretching and/or tilting or the like. Thus, by aligning the initial image with the at least one support image deviations between the initial image and the at least one support image due to the different positions of the respective cameras relative to each other and/or the different fields of view provided by the different cameras are corrected which might also include corrections due to movement of the multiple cameras device during capturing the initial image and the at least one support image.

In step S03, the aligned initial image and the at least one support image are compared and based on the comparison at least one region of difference is identified corresponding to image artifacts. Thus, an artifact affecting the initial image but not one of the support images, causes a deviation or difference between the at least two images which can identified as image artifact. Therein, the area in the image containing the difference is identified as region of difference corresponding to the image artifact. Therein, the region of difference may have a shape directly corresponding to the artifact or may have any other shape such as a circle or square containing the image artifact.

In step S04, image information is transferred from the at least one region of difference from the at least one support image to the initial image to form the final image. Therein, the transferred image information is the information containing the image content which can be identified by the color information.

Thus, by the present invention the presence of the two or more cameras is utilised in order to remedy image artifacts in the captured images. Therein, image information of one of the support images are used and transferred to the initial image of the target camera, thereby replacing the corrupted image information in the initial image. Thus, the final image is a combination of the image information of the initial image outside the at least one region of difference and the image information of the at least one support image within the region of difference. Thus, image artifacts such as lens flares, scratches or dust on the target camera or the like can be resolved without excessive computational efforts or additional hardware.

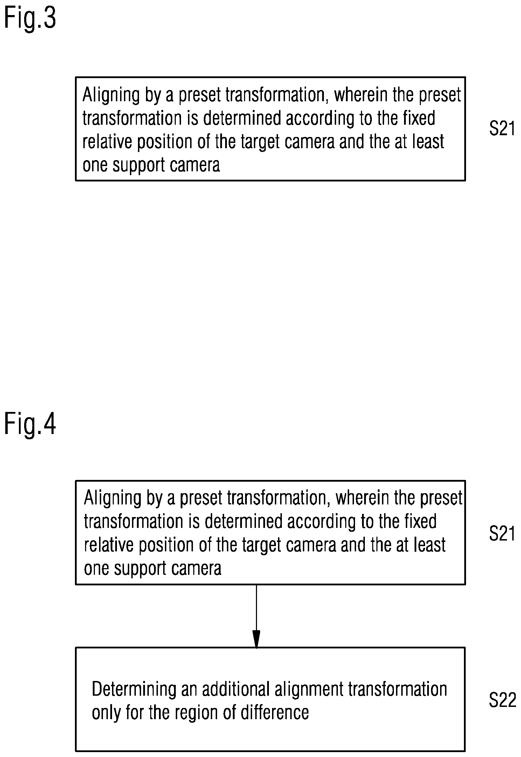

In order to further reduce the computational efforts necessary, according to step S21 as shown in Fig. 3, being a further embodiment of step S02, alignment of the initial image and the at least one support image can be performed by a preset or precalculated transformation. Since the relative position of the target camera and the at least one support camera are fixed, the transformation can be determined in advance, stored in the multiple cameras device and applied in order to align the initial image and the at least one support image.

Figure 4 shows another detailed embodiment of the alignment step S02 wherein first in step S21 a coarse transformation for alignment of the initial image and the at least one support image is performed by the preset transformation. In step S22 an additional alignment transformation is determined for aligning the position of the one or more regions of difference between the initial image and the at least one support image. Therein, first, the coarse alignment by the preset transformation is performed according to step S21. Subsequently, one or more regions of difference are identified according to step S03 followed by the fine alignment of step S22. This additional fine alignment of step S22 can be performed every time the method is carried out. Alternatively, in order to reduce the computational efforts, the additional fine alignment of step S22 can be performed if the distance between the multiple cameras device and the (real-world) object to be captured is closer together than a preset threshold. In this case the precalculated or preset transformation of the coarse alignment alone is not applicable anymore and would cause artifacts in the final image due to misalignment of the initial image and the at least one support image. Thus, if the distance between the object to be captured and the multiple cameras device is smaller than a preset threshold, fine alignment of step S22 is carried out to avoid incorporation of additional image artifacts in the final image.

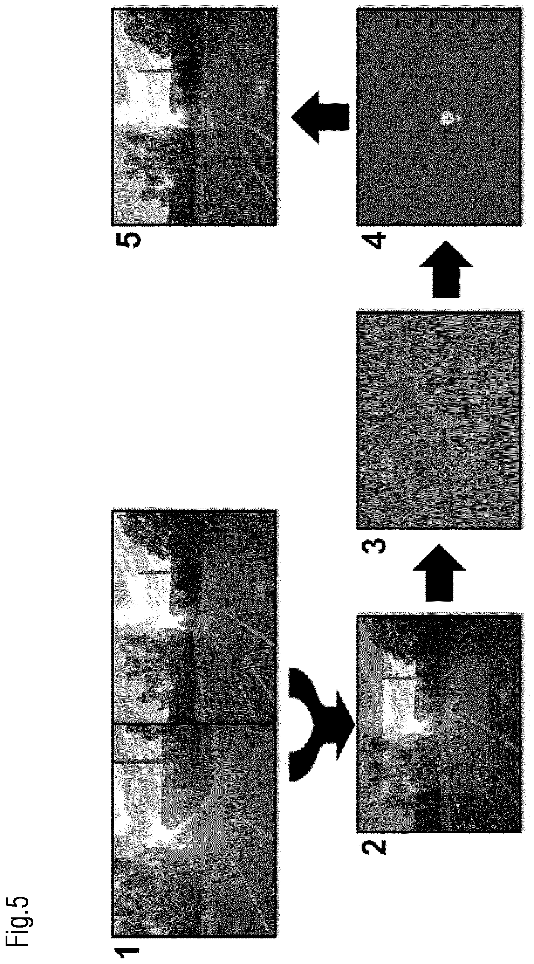

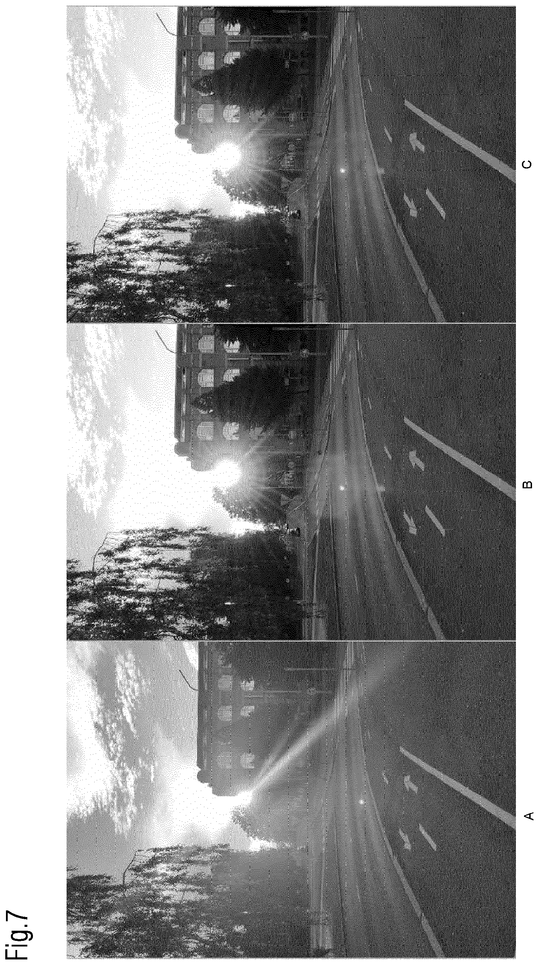

Figure 5 shows a schematic representation of the method according to the present invention for removal of a lens flare or other image artifacts. Therefore, at least two images are captured shown in Fig. 5(1) by a support camera (left) and a target camera (right), wherein the target camera is the camera selected by the user or the device that shall provide the final image. Therein, it is noted that the initial image captured by the target camera comprises lens flare as shown in detail in figure 7B. In addition, also the support image shows image artifacts as further shown in figure 7A shown as a lens flare and a reduced contrast in the image ("haze").

In the second step shown in Fig. 5(2), the initial image and the support image are aligned. Since the cameras' relative location is predefined on a certain device, it is not needed to calculate the transformation matrix every time images are taken. It has been verified by capturing a large number of images with a tripod and observing that the transformation matrix remains the same. This simply saves time and computation. However, this is true when the scene or object to be captured is further than a certain distance. If the scene or object is too close to the camera, then the transformation matrix is different than the precalculated one. Hence, transferring information with incorrectly aligned images may yield artifacts. Therefore, a fine alignment is performed after calculating the initial glare mask corresponding to the one or more regions of difference, as shown in Fig. 5(3). Therein, a new transformation matrix is calculated using the region around the one or more regions of difference and re-register the images. Once the images are perfectly aligned, the transferred information does not cause any artifacts even if the glare mask is incorrect. Moreover, since the processing region is relatively small, it is significantly more efficient than calculating the transform for the entire image.

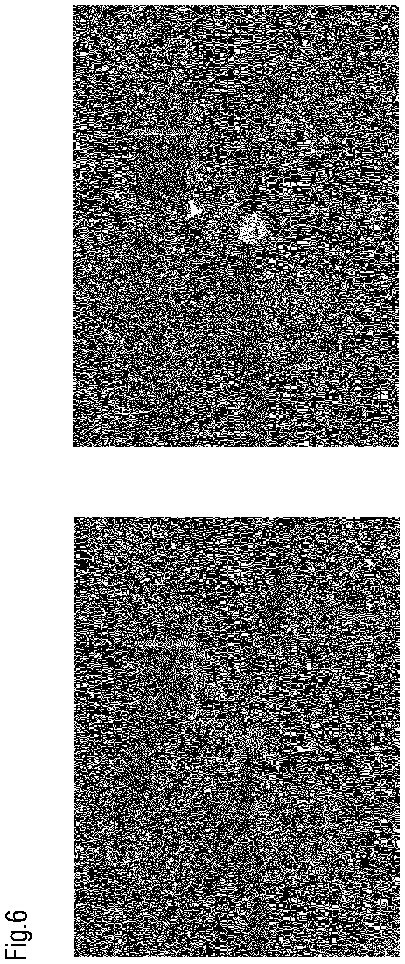

Once the images are aligned, they are compared to reveal the location of the image artifacts as indicated in Fig. 5(3). Any comparison scheme can be used with the present invention and the present invention is not limited to a specific way how to compare the aligned images. Fig. 5(3) shows a comparison of the a-channel of the images in the Lab colour space. Using any color space and channel (or any combination), as well as any other comparison method is possible. Since the images are taken at the same time, aligned images have minor differences and any strong difference indicate the location of an artifact such as glare in the present example. The region of difference indicated in Fig. 6 (right) is obtained by using a region detection algorithm on the difference image in Fig. 6 (left) based on a difference image of the respective a-channels. But the proposal does not define nor restrict this method either. Whereas any complicated region detection algorithm is applicable, a simple thresholding may also work depending on the method used for comparison.

As mentioned above, a region detection algorithm is used on the difference image in Fig. 6 (right) in order to extract the region of the artifact. In the present example a "Maximally Stable Extremal Regions" (MSER) algorithm is used. Further, also additional characteristics of the detected regions or prior knowledge depending on the kind of artifacts to be removed are used in order to eliminate ineligible regions from the final mask, such as their shape, size, relative distances from each other etc. Additionally, some motion estimation algorithms can be used to account for the regions arising from the inaccuracies of image alignment (such as the differences in tree region, or border of the chimney in the present example, as shown in Fig. 6 (right)). Such algorithms are known to be effective in accounting for small camera movements since they are targeted for detecting larger object movements.

Once the region of differences as mask is obtained as shown in Fig. 5(4), transfer of image information from the support image to the initial image within the one or more regions of difference can be performed in order to form the final image. Therein, the one or more regions of difference can be implemented as an adjustable mask region in order to transfer image information from the at least one support image to the final image more smoothly and do not create sharp edges in the introduced image information in the final image.

In order to achieve the glare-free image as shown in Fig. 5(5), the a- and b-channels of the Lab color space are transferred from the wide-angle image to the ultra-wide-angle image. As for the L-channel, it is kept as is and a contrast enhancement is applied for any remaining visible glare (see Fig. 7C). Therein, the L-channel relating to the lightness is not transferred since the brightness of two images may differ significantly (see for example Fig. 7A and 7B). Instead, the difference in the L-channel is used as a measure for the strength of the contrast enhancement. Once all L, a and b-channels are corrected, a glare-free image as the final image is obtained (see Fig. 7C and Fig. 5(5), respectively).

Since the field of view of each camera is different, their white balances may also be different. Therefore, their white balances might be matched before transferring any color information from one image to another. Therein, white balance gains can be taken directly from the device, for example from the Auto White Balance (AWB) algorithm. The present invention does not define or restrict the method to be used.

Different colour channels can be used of course being transferred between the support image and the initial image depending on the used colour space. The present invention is not limited to the specific use of the Lab colour space. However, due to the different handling of the lightness and the colour information, it is advantageous to use a comparable colour space having also a lightness value.

Thus, a way to remove undesired artifacts in an image captured with a mobile phone camera is enabled utilizing the possibility of transferring image information among images captured simultaneously with different cameras of one device is proposed by the method according to the present invention.

## Claims

1. Method for removing image artifacts, implemented in a multiple cameras device, comprising the steps of:
a) Capturing (S01) an initial image with the target camera and capturing at least one support image with a support camera at substantially the same time;
b) Aligning (S02) the initial image and the at least one support image;
c) Comparing (S03) the aligned initial image and the at least one support image and identify at least one region of difference corresponding to image artifacts;
d) Transferring (S04) image information of the at least one region of difference from the support image to the initial image to form the final to remove the image artifact.

2. Method according to claim 1, wherein more than one support images from a respective number of support cameras are captured.

3. Method according to claim 1 or 2, wherein aligning (S21) is performed by a preset transformation, wherein the preset transformation is determined according to the fixed relative position of the target camera and the at least one support camera.

4. Method according to claim 3, wherein after aligning (S21) the initial image and the at least one support image by the preset transformation, determining (S22) an additional alignment transformation preferably for the at least one region of difference.

5. Method according to claim 4, wherein the additional alignment transformation is determined if the distance between the initial camera and the object of the image is smaller than a preset threshold.

6. Method according to any of claims 1 to 5, wherein the region of difference is identified by one or more of a region detection algorithm and a preset threshold of the differences between the initial image and the at least one support image.

7. Method according to any of claims 1 to 6, wherein the region of difference is identified by one or more of a shape, size, color, texture, relative distances from each other and number of regions.

8. Method according to any of claims 1 to 7, wherein the region of difference is identified by a difference in one channel or a sub-set of channels of the respective color space.

9. Method according to any of claims 1 to 8, wherein the transferred image information contains one channel or a sub-set of channels of the respective color space.

10. Method according to any of claims 1 to 9, wherein the transferred image information does not contain a lightness value.

11. Method according to any of claims 1 to 10, wherein the contrast of the initial image or the contrast of the region of difference is enhanced corresponding to a difference of a lightness value between the initial image and the at least one support image preferably in the region of difference.

12. Method according to any of claims 1 to 11, wherein a white balancing is performed before transferring the image information to match the white balancing between the initial image and the at least one support image.

13. Multiple cameras device having at least two different cameras and further comprising a processor and a memory storage, wherein the memory storage stores instructions, when executed by the processor, to perform the method according to any of claims 1 to 12.

14. Mobile terminal comprising a multiple cameras device according to claim 13.
